Europäisches Patentamt

European Patent Office

Office européen des brevets

(19)

(11) Veröffentlichungsnummer: **0 177 721 B1**

(12)

# EUROPÄISCHE PATENTSCHRIFT

(45) Veröffentlichungstag der Patentschrift:
11.05.88

(51) Int. Cl.⁴: **H 01 M 4/76, B 29 C 65/20**

(21) Anmeldenummer: **85110438.0**

(22) Anmeldetag: **20.08.85**

(54) Verfahren zum Verschliessen von Röhrchenelektroden sowie Vorrichtung und Fussleiste zur Durchführung des Verfahrens.

(30) Priorität: **09.10.84 DE 3436978**

(43) Veröffentlichungstag der Anmeldung:
**16.04.86 Patentblatt 86/16**

(45) Bekanntmachung des Hinweises auf die Patenterteilung:
**11.05.88 Patentblatt 88/19**

(84) Benannte Vertragsstaaten:
**AT BE CH DE FR GB IT LI SE**

(56) Entgegenhaltungen:
**DE - A - 2 657 184**
**DE - A - 3 206 804**
**FR - A - 2 220 885**
**GB - A - 839 145**
**US - A - 4 005 975**

**PATENTS ABSTRACTS OF JAPAN, Band 8, Nr. 115
(E-247) [1552], 29. Mai 1984, JP-A-59 29 362**

(73) Patentinhaber: **HADI Offermann Maschinenbau GmbH,
Schulstrasse 31, D-5820 Gevelsberg (DE)**

(72) Erfinder: **Der Erfinder hat auf seine Nennung verzichtet**

(74) Vertreter: **Dörner, Lothar, Dipl.-Ing.,
Stresemannstrasse 15, D-5800 Hagen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Verschliessen von positiven Röhrchenelektroden mit einer Fussleiste aus Kunststoff, insbesondere Polyäthylen, sowie auf eine Vorrichtung und eine Fussleiste zur Durchführung des Verfahrens.

Um die einzelnen Röhrchen einer Röhrchenelektrode nach dem Füllen miteinander zu verbinden und sie zu verschliessen, werden vorgefertigte Fussleisten, die aus einem säure- und laugenfesten Kunststoff, zum Beispiel Polyäthylen, bestehen, verwendet. Die vorgefertigte Fussleiste besteht aus einer Vielzahl hohlzylindrischer Teile, von denen jedes an der Basis einen Flansch aufweist. Über die Flansche sind die Teile im vorgegebenen Abstand zu der Fussleiste aneinandergereiht. Jedes Teil nimmt einen der Gitterstäbe in den Röhrchen auf. Die vorgefertigte Fussleiste wird auf die mit aktiver Masse gefüllten Röhrchen aufgepresst beziehungsweise aufgeschlagen. Hierbei ist es notwendig, die Gitterstäbe in den einzelnen Röhrchen zu zentrieren, da bei exzentrischer Lage der Gitterstab beim Aufbringen der Fussleiste nicht erfasst und in das Innere des Röhrchen oder zur Seite gedrückt wird.

Der Erfindung liegt die Aufgabe zugrunde, ein Verfahren sowie eine Vorrichtung und eine Fussleiste zu schaffen, die es ermöglichen, die Fussleiste in vereinfachter und sicherer Weise auf die Röhrchenelektroden aufzubringen. Das diese Aufgabe lösende Verfahren ist dadurch gekennzeichnet, dass die Fussleiste in eine Profilschiene eingeführt, mit der Profilschiene gegen einen aus einer Ausgangslage vor die Fussleiste gefahrenen Heizspiegel gedrückt, nach Ablauf einer Anschmelzzeit und Rückführung des Heizspiegels in seine Ausgangslage gegen die von einer in Höhe der Profilschiene angeordneten Aufnahme gehaltene Röhrchenelektrode gepresst und mit ihrer Tasche verbunden wird.

Das Verfahren nach der Erfindung ist ein mechanisches Verfahren, dem ein thermisches Verfahren überlagert ist: Das auf Länge geschnittene Fussleistenprofil aus Kunststoff wird im Heisssiegelverfahren — durch Spiegelschweissen — verformt und durch Pressen mit der Röhrchentasche verbunden. Die Verbindung ist ein Klebevorgang, bei dem das zähflüssige Kunststoffmaterial in die Poren der Gewebetasche gepresst wird, wo es erkaltet. Die Gitterstäbe der Röhrchenelektrode werden nicht belastet; es kommt nicht zu Verformungen oder gar Brüchen.

Die Vorrichtung zur Durchführung des Verfahrens ist dadurch gekennzeichnet, dass die Profilschiene Backen aufweist, zwischen denen die Fussleiste gehalten ist und die mittels eines Profilhalters gegen den Heizspiegel und gegen die Röhrchenelektrode in der Aufnahme bewegbar sind.

Die Fussleiste zur Durchführung des Verfahrens ist gekennzeichnet durch ein massives Mittelstück, an dessen Basis seitlich in Richtung der Fussleiste durchgehende Rastvorsprünge und an dessen Kopf ebenfalls in Richtung der Fussleiste durchgehende Flügel angeformt sind, die im Anschluss an das Mittelstück die Fortsetzung seiner Seitenwände bilden, im Abstand nach aussen abgewinkelt und in die Ebene der Seitenwände rückbar sind. Die so ausgebildete Fussleiste ist für die Aufnahme der Gitterstäbe lediglich seitlich begrenzt. In Richtung der Fussleiste bilden die Ansätze der Flügel zwischen sich eine durchlaufende Rinne. Die der Basis abgewandten Flächen in den abgewinkelten Teilen der Flügel bilden die Schmelzzone an denen der Heizspiegel anliegt. Diese abgewinkelten Teile werden beim Anpressvorgang geschwenkt, sodass sie in der Verlängerung der Seitenwände der Fussleiste liegen und die Röhrchentasche umgreifen.

Andere Weiterbildungen und Ausgestaltungen der Erfindung sind in weiteren Unteransprüchen angegeben. Ein Ausführungsbeispiel der Erfindung ist in der Zeichnung dargestellt und wird nachfolgend im einzelnen beschrieben. Es zeigen:

Fig. 1 in vergrösserter Darstellung eine Fussleiste in Ausgangslage im Querschnitt;

Fig. 2 die in Fig. 1 dargestellte Fussleiste an eine Röhrchenelektrode angebracht;

Fig. 3 in schematischer Darstellung eine Vorrichtung zum Verschliessen von Röhrchenelektroden in der Ansicht von vorne;

Fig. 4 die in Fig. 3 dargestellte Vorrichtung in einer Seitenansicht;

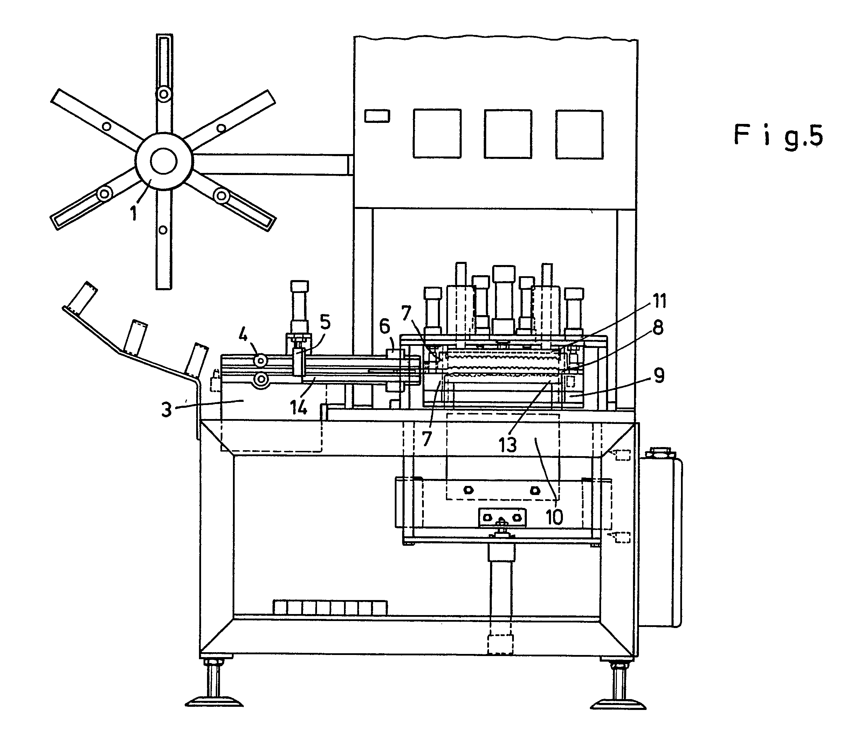

Fig. 5 die in Fig. 3 dargestellte Vorrichtung in konstruktiver Ausgestaltung.

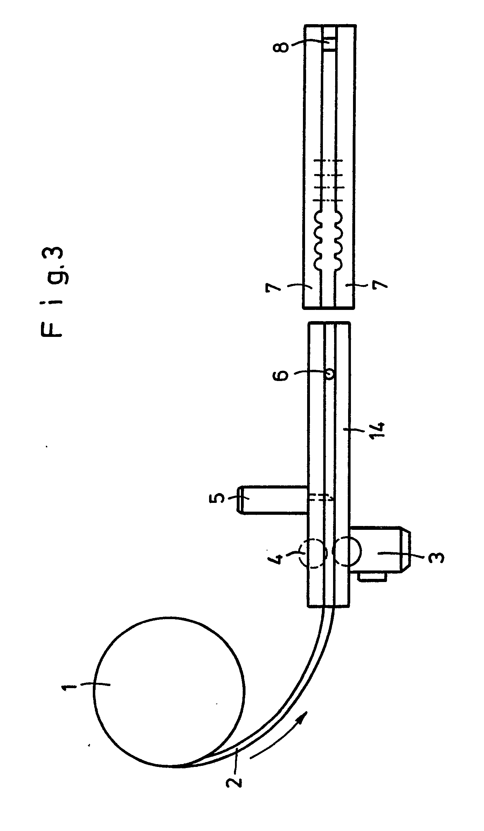

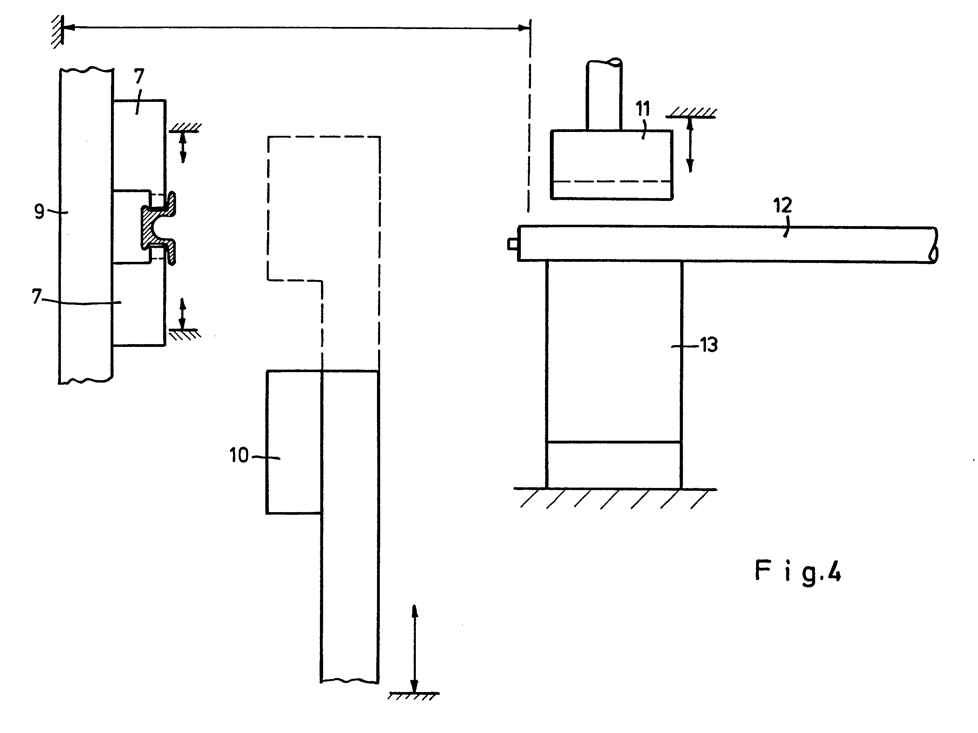

Von einer Haspel 1 wird ein Fussleistenprofil 2 aus Kunststoff, zum Beispiel Polyäthylen, abgerollt und in eine Führungsschiene 14 eingeführt — Fig. 3 —. In der Führungsschiene 14 wird das Fussleistenprofil 2 zwischen eine Transportrolle eines Getriebemotors 3 und eine Gegenrolle 4 gebracht, von denen es in Längsrichtung der Führungsschiene weiter transportiert wird, bis das freie Ende einen Stopper 6 in der Führungsschiene 14 erreicht. Auf dem haspelseitigen Teil ist im Abstand von dem Stopper 6 ein Messer 5 vorgesehen. Mit Hilfe des Messers 5 und des Stoppers 6 wird von dem Fussleistenprofil 2 eine Fussleiste gewünschter Länge abgeschnitten. Die Länge ist bestimmt durch die Breite einer Röhrchenplatte 12 — Fig. 4 —, die die Fussleiste aufnimmt. Der Stopper 6 gibt den Weg für die abgeschnittene Fussleiste frei. Der verbleibende Teil des Fussleistenprofils 2 drückt die abgeschnittene Fussleiste aus der Führungsschiene 14 in eine fluchtend angeordnete Profilschiene 7 in Anschmelzposition. Die Anschmelzposition wird bestimmt durch einen Stopper 8, der in Bewegungsrichtung der Fussleiste in der Profilschiene 7 an deren Ende vorgesehen ist. Nachdem die Fussleiste ihre Anschmelzposition erreicht hat, wird das verbleibende Fussleistenprofil 2 wieder in die Führungsschiene 14 zurückgezogen, und zwar so weit, dass das neue freie Ende auf dem haspelseitigen Teil des Stoppers 6 angeordnet ist.

Die Profilschiene 7 weist Backen auf — Fig. 4 —. Zwischen den Backen der Profilschiene 7 ist die Fussleiste gehalten. Die Backen der Profilschiene 7 sind auf einem Profilhalter 9 bewegbar und mit ihm in Richtung sowohl auf einen Heizspiegel 10 als auch auf eine Aufnahme 13 bewegbar. Die Aufnahme 13 nimmt die Röhrchenelektrode 12 auf. Die Röhrchenelektrode 12 ist von einem Niederhalter 11 in der Aufnahme 13 gehalten. Die Aufnahme 13 mit der Röhrchenelektrode 12 und dem Niederhalter 11 ist im Abstand von den Backen der Profilschiene 7 angeordnet. In den Raum zwischen der Röhrchenelektrode 12 und der Profilschiene 7 in Ausgangslage ist der Heizspiegel 10 bewegbar. Die Profilschiene 7 führt mit dem Profilhalter 9 eine Bewegung bis zur Aufnahme 13 aus. In Ausgangslage der Profilschiene 7 ist der Heizspiegel 10 quer zu dieser Bewegungsrichtung in den Weg der Profilschiene 7 bewegbar.

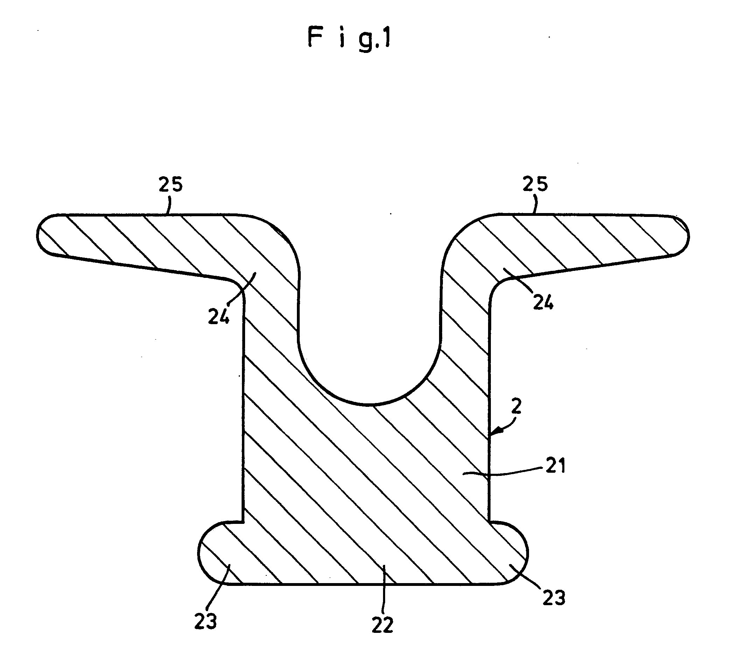

Die Fussleiste 2 weist ein massives Mittelstück 21 auf — Fig. 1 —. An der Basis 22 des massiven Mittelstücks 21 sind seitlich in Richtung der Fussleiste durchgehende Rastvorsprünge 23 angeformt. Mit den Rastvorsprüngen 23 wird die Fussleiste während des Befestigungsvorgangs zwischen den Backen der Profilschiene 7 gehalten. Am Kopf des massiven Mittelstücks 21 sind ebenfalls in Richtung der Fussleiste 2 durchgehende Flügel 24 angeformt. Im Anschluss an das massive Mittelstück 21 bilden die Flügel 24 die Fortsetzung der Aussenwände des Mittelstücks 21. Im Abstand von dem Ansatz sind die Flügel 24 nach aussen abgewinkelt. Mit ihren Aussenflächen 25 werden die Flügel 24 gegen den Heizspiegel 10 gedrückt; sie stellen die Schmelzzone der Fussleiste 2 dar. Nach dem Anschmelzen und während des Anpressens der Fussleiste 2 an die Röhrchentasche werden die abgewinkelten Flügel 24 nach innen geschwenkt, sodass sie ebenfalls in der Verlängerung der Seitenwände des massiven Mittelstücks 21 liegen. Zwischen den Flügeln 24 ist der zu verschliessende Fuss der Röhrchenelektrode gehalten.

Zum Anbringen der Fussleiste 2 an die Röhrchenelektrode fährt bei der in Fig. 4 dargestellten Lage der Vorrichtung der Heizspiegel 10 in die Höhe der Aussenflächen 25 der Flügel 24. Der Profilhalter 9 drückt die Profilschiene 7 mit der Fussleiste 2 gegen den Heizspiegel 10. Die Aussenflächen 25 der Fussleiste 2 werden angeschmolzen. Nach Ablauf der Anschmelzzeit rückt der Profilhalter 9 ein kleines Stück vom Heizspiegel 10 ab. Der Heizspiegel 10 fährt aus der gestrichelt dargestellten Heizstellung in seine Ausgangslage zurück. Der Profilhalter 9 fährt dann schnell vor und drückt das Fussleistenprofil 2 auf die Röhrchenelektrode. Die Flügel 24 der Fussleiste 2 werden über das Gewebe der Röhrchentasche 31 geschoben. Die Profilschiene 7 presst die Flügel 24 auf das Gewebe der Röhrchentasche 31. Nach kurzer Abkühlzeit öffnet die Profilschiene 7 und der Profilhalter 9 fährt mit der Profilschiene 7 in die Ausgangsstellung zurück.

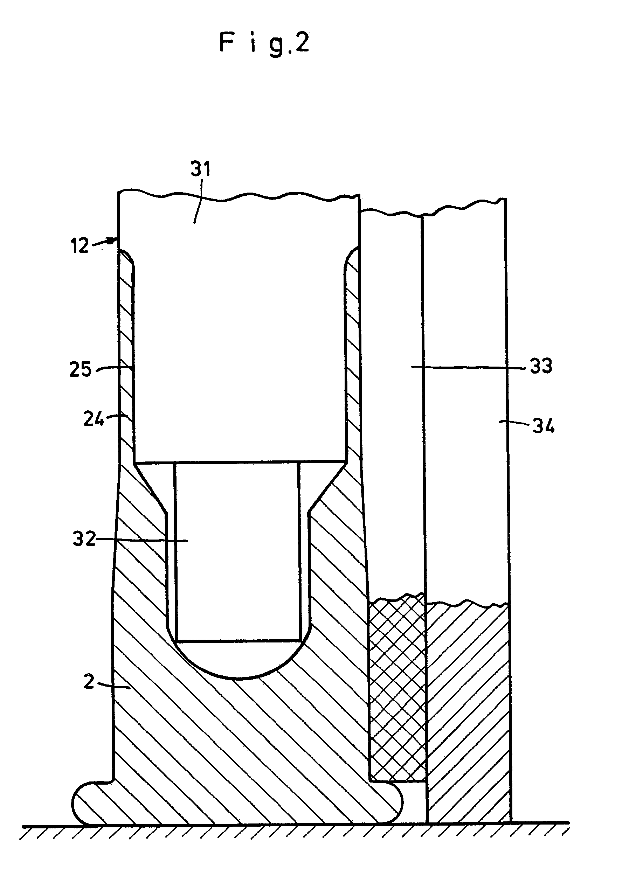

Der kombinierte Press- und Wärmvorgang führt zu einer innigen Verbindung der Fussleiste 2 im Bereich der Aussenflächen 25 ihrer Flügel 24 mit der Röhrchentasche 31. Die Gitterstäbe 32 der Röhrchenelektrode werden in dem Bereich zwischen den Flügeln 24 gehalten — Fig. 2 —. Die Röhrchenelektrode ist die positive Elektrode eines Bleiakkumulators. Über einen Separator 33 getrennt liegt die negative Platte 34 des Bleiakkumulators an. Die Backen der Profilschiene 7 sind so ausgebildet, dass das Andrücken der Flügel 24 an die Röhrchentasche 31 nicht nur im Bereich der Längsseiten, sondern auch in den Zwischenräumen zwischen den einzelnen Röhrchenelektroden erfolgt. Die Zuführung und Entnahme der Röhrchenelektroden kann manuell oder automatisch geschehen.

**Patentansprüche**

1. Verfahren zum Verschliessen von Röhrchenelektroden mit einer Fussleiste aus Kunststoff, dadurch gekennzeichnet, dass die Fussleiste in eine Profilschiene eingeführt, mit der Profilschiene gegen einen aus einer Ausgangslage vor die Fussleiste gefahrenen Heizspiegel gedrückt, nach Ablauf einer Anschmelzzeit und Rückführung des Heizspiegels in seine Ausgangslage gegen die von einer in Höhe der Profilschiene angeordneten Aufnahme gehaltene Röhrchenelektrode gepresst und mit ihrer Tasche verbunden wird.

2. Verfahren nach Anspruch 1, dadurch gekennzeichnet, dass die Fussleiste von einem auf einer Haspel abrollenden Fussleistenprofil in eine Führungsschiene befördert, auf Länge geschnitten und in die Profilschiene eingeführt wird.

3. Verfahren nach Anspruch 1 oder 2, dadurch gekennzeichnet, dass die abgeschnittene Fussleiste von dem verbleibenden Fussleistenprofil aus der Führungsschiene in die fluchtend angeordnete Profilschiene in Anschmelzposition gedrückt wird, wonach das verbleibende Fussleistenprofil wieder in die Führungsschiene zurückgezogen wird.

4. Vorrichtung zur Durchführung des Verfahrens nach einem der Ansprüche 1 bis 3, dadurch gekennzeichnet, dass die Profilschiene (7) Backen aufweist, zwischen denen die Fussleiste (2) gehalten ist und die auf und mit einem Profilhalter (9) gegen den Heizspiegel (10) und gegen die Röhrchenelektrode (12) in der Aufnahme (13) bewegbar sind.

5. Vorrichtung nach Anspruch 4 zur Durchführung des Verfahrens nach Anspruch 2, dadurch gekennzeichnet, dass die Führungsschiene (14) einen Stopper (6) und auf dem haspelseitigen Teil im Abstand ein Messer (5) sowie einen Antrieb mit Transportrolle (3) und Gegenrolle (4) aufweist.

6. Vorrichtung nach Anspruch 4 oder 5, dadurch gekennzeichnet, dass die Profilschiene (7) einen Stopper (8) aufweist.

7. Vorrichtung nach Anspruch 4, dadurch gekennzeichnet, dass die Röhrchenelektroden (12) in der Aufnahme (13) von einem Niederhalter (11) im Abstand von der in Richtung der Aufnahme (13) bewegbaren Profilschiene (7) gehalten und in den Raum zwischen Röhrchenelektrode (12) und Profilschiene in Ausgangslage der Heizspiegel (10) bewegbar ist.

8. Fussleiste zur Durchführung des Verfahrens nach einem der Ansprüche 1 bis 3, gekennzeichnet durch ein massives Mittelstück (21), an dessen Basis (22) seitlich in Richtung der Fussleiste durchgehende Rastvorsprünge (23) und an dessen Kopf ebenfalls in Richtung der Fussleiste (2) durchgehende Flügel (24) angeformt sind, die im Anschluss an das Mittelstück (21) die Fortsetzung seiner Seitenwände bilden, im Abstand nach aussen abgewinkelt und in die Ebene der Seitenwände drückbar sind.

**Claims**

1. A method of closing off tubes-type electrodes with a bottom strip of plastics, characterized in that the bottom strip is introduced into a profiled rail and is pressed by the profiled rail against a heat reflector which from a starting position is run out in front of the bottom strip, after the expiry of a melting time and the return of the heat reflector into its starting position the bottom strip is pressed against the tubes-type electrode which is being held by a receiver arranged at the height of the profiled rail, and is connected by its pocket.

2. A method as in Claim 1, characterized in that the bottom strip is advanced into a guiderail from a bottom-strip section rolled up on a reel, is cut to length and introduced into the profiled rail.

3. A method as in Claim 1 or 2, characterized in that the cut off bottom strip is forced by the remaining bottom-strip section out of the guide rail into the position for melting in the profiled rail arranged in alignment, after which the remaining bottom-strip section is retracted again into the guiderail.

4. A device for the performance of the method as in one of the Claims 1 to 3, characterized in that the profiled rail (7) exhibits cheeks between which the bottom strip (2) is held and which are movable on and by a profile holder (9) against the heat reflector (10) and against the tubes-type electrode (12) in the receiver (13).

5. A device as in Claim 4 for the performance of the method as in Claim 2, characterized in that the guiderail (14) exhibits a stopper (6) and at a distance away on the part next the reel a cutter (5) as well as a drive with a conveyor roller (3) and counter-roller (4).

6. A device as in Claim 4 or 5, characterized in that the profiled rail (7) exhibits a stopper (8).

7. A device as in Claim 4, characterized in that the tubes-type electrodes (12) (are) held in the receiver (13) by a holding-down device (11) at a distance from the profiled rail (7) movable in the direction of the the receiver (13) and (are) movable into the space between the tubes-type electrode (12) and the profiled rail into the starting position of the heat reflector (10).

8. A bottom strip for the performance of the method as in one of the Claims 1 to 3, characterized by a massive middle piece (21) onto the base (22) of which catch-projections (23) continuous in the direction of the bottom strip are moulded at the side and onto the head of which, likewise continuous in the direction of the bottom strip (2), are moulded lobes (24) which beyond the middle piece (21) form the continuation of its sidewalls and are bent apart outwards and may be pressed into the plane of the sidewalls.

**Revendications**

1. Procédé pour le scellement d'électrodes à tubes avec un socle en matière plastique, caractérisé en ce que le socle est engagé dans un rail profilé, appliqué avec le rail profilé contre un réflecteur amené devant le socle à partir d'une position de départ, pressé, au bout d'un temps de fondage et après le retour du réflecteur dans sa position de départ, contre une électrode à tubes maintenue par un support disposé au niveau du rail profilé et réuni à la poche de ladite électrode.

2. Procédé selon la revendication 1, caractérisé en ce que le socle est amené par un profilé de socle débité par un dévidoir dans une glissière, coupé à longueur et engagé dans le rail profilé.

3. Procédé selon l'une des revendications 1 ou 2, caractérisé en ce que, par le profilé de socle restant, le socle sectionné est poussé hors de la glissière dans la position de fondage dans le rail profilé aligné avec la glissière, le profilé de socle restant étant ensuite ramené dans la glissière.

4. Dispositif pour la mise en oeuvre du procédé selon l'une quelconque des revendications 1 à 3, caractérisé en ce que le rail profilé (7) comprend des mâchoires entre lesquelles est maintenu le socle (2) et qui peuvent être déplacées, sur et avec un support de profilé (9), contre le réflecteur (10) et contre l'électrode à tubes (12) placée dans le logement (13).

5. Dispositif selon la revendication 4 pour la mise en oeuvre du procédé selon la revendication 2, caractérisé en ce que la glissière (14) comprend un élément d'arrêt (6) et, à distance de celui-ci, du côté dévidoir, un couteau (5) ainsi qu'un système d'entraînement avec un galet transporteur (3) et un galet conjugué (4).

6. Dispositif selon l'une des revendications 4 ou 5, caractérisé en ce que le rail profilé (7) comprend un élément d'arrêt (8).

7. Dispositif selon la revendication 4, caractérisé en ce que les électrodes à tubes (12) dans le logement (13) sont maintenues par un positionneur (11) à distance du rail profilé (7) qui peut être déplacé en direction du logement (13) et que le réflecteur (10) peut être déplacé dans l'espace entre l'électrode à tubes (12) et le rail profilé dans la position de départ.

8. Socle pour la mise en oeuvre du procédé selon l'une quelconque des revendications 1 à 3, caractérisé en ce qu'il comprend une section centrale massive (21) sur la base (22) de laquelle sont conformés latéralement, dans la direction du socle, des éléments encliquetables continus (23) et dont la tête est munie d'ailettes continues (24) qui s'étendent, elles aussi, dans le sens du socle (2), forment à la suite de la section centrale (21) le prolongement de ses parois latérales, sont coudées à distance vers l'extérieur et peuvent être poussées dans le plan des parois latérales.

# F i g.1

# F i g.2

F i g.3

Fig.4

Fig.5